# EUROPEAN PATENT APPLICATION

(11) **EP 1 037 365 A1**
(43) Date of publication of application: **20.09.2000**
(21) Application number: 00301652.4
(22) Date of filing: 01.03.2000
(51) Int. Cl.: H02K 21/04

(54) **Motor generator developing high torque**

(30) Priority: 12.03.1999 JP 6616899; 12.03.1999 JP 6619099
(71) Applicant: ISUZU CERAMICS RESEARCH INSTITUTE CO., LTD., Fujisawa-shi, Kanagawa-ken (JP)
(72) Inventor: Kawamura, Hideo, Kouza-gun, Kanagawa-ken 253-0105 (JP)
(74) Representative: Jenkins, Peter David

(57) **Abstract**

A motor generator is disclosed, in which a rotor (3) has a rotor shaft (2) having mounted thereon with a permanent-magnet member (5), a magnetic permeable member (6) and a magnetic path core (7), electromagnets (9) being arranged on lengthwise opposing ends of the permeable member (6), each to each end, and switching means (35) are provided to turn on an electric current applied to the electromagnets (9), which are thus energized to develop magnetic flux identical or opposite in direction to the magnetic flux produced by the permanent-magnet member (5), depending on the direction of the electric current. The permeable member (6) is made of platy laminations of amorphous alloys, the platy laminations being arranged substantially normal to the permanent-magnet member (5) to thereby establish paths for magnetic flux, through which the magnetic flux is permitted to pass from the axial direction to the radial direction of the rotor (3).

## Description

The present invention relates to an electromechanical energy converter or a motor generator able to develop a great torque, comprising a rotor of permanent magnets and a stator arranged around the rotor.

While the motor generators are conventionally of the direct-current machines and the induction machines, the motor generators of permanent-magnet type, in recent years, have been extensively used in diverse fields of industries because they are simple in construction and, however, higher in dynamoelectric efficiency. In a motor generator the frequency or rpm of the rotor increases as voltages and amperes rise, so that the rotor is subject to much more centrifugal force. The rotor will, result in a possible breakage or burst if the centrifugal force becomes too large. This requires the motor generator having a rotor sufficient in strength resistant to the much more centrifugal force. To deal with the requirement, a prior rotor of this type has been developed, which is enhanced in mechanical strength by reinforcing means such as reinforcing annular members encompassing tightly around the perimeter of the permanent magnets composing the rotor.

Disclosed in, for example, Japanese Patent Laid-Open No. 272850/1987 is permanent-magnet rotating machine having a rotor in which permanent magnets are arranged and containers are provided to contain therein magnetic material flowing radially owing to the revolution of the rotor to thereby form magnetic or field poles.

Moreover, another prior art of an alternating current motor generator developing a high-power output is disclosed in Japanese Patent Laid-Open No. 236260/1995, in which a magnetic flux density is controlled in proportion to the rpm of the rotor to adjust adequately a value of the generated amperes or voltages. A control ring is arranged between the rotor and the stator for rotation relatively of them and further a permeable member is provided in such a manner as to come in and out contact with the control ring.

In the meantime, automotive engines, especially, diesel engines are provided with a particulate trap to extract particulate products of the exhaust from the engine to clean the exhaust. The particulate trap has usually heating means to burn away the particulates, mainly in the form of carbon and partially burned hydrocarbons (HC) trapped on a filter, thereby regenerating or reactivating the filter. The heating means is to be energized with electric power from a generator or battery equipped in the automotive vehicle, nevertheless there is no guarantee in vehicle that sufficient electric power is always ready for heating. To cope with this, the motor generator to be mounted on the automotive vehicle, in addition to high efficiency and compact construction, is desired to help ensure an enough electric power even under a low-speed operation of the engine.

Refrigerator lorries in general are provided with evaporators, compressors and generators for actuating the compressors or the like. On stopping or operating with a partial load the engine in such lorry, the generated electric power in the generator decreases rapidly resulting in de-energiztion of the refrigerator. To cope with this, some prior lorries have extra motors that may be energized by another electric source, or alternating current source at 100volts, to operate the compressors when the engine is at standstill. On the other hand, the global trend of the CO₂ reduction requires keeping the earth environment clean makes it ever more accelerative to develop diverse varieties of technology for improving the rate of consumption of fuel by an automobile. Among the more recent advances in controlling the possible sources of atmospheric pollution from the automobile is a hybrid vehicle, which requires developing an electric motor capable of ensuring a considerable great torque even if the engine is operated at low-speed ranges.

Although most permanent-magnet motor generators are simple in construction and able to provide a high output performance, they can not be expected to deliver a considerable high torque. That is, as the permanent magnets in the motor generator are constant in magnetic force, only making the motor generator itself larger in size to intensify the magnetic force of the permanent magnets may provide the much electromagnetic force under the low-speed operation. Especially in the permanent-magnet motor generators, were the magnetic flux generated in the permanent magnets not allowed to pass efficiently, smoothly through small spaces to an axial core member of permanent magnets arranged around a rotor shaft of the rotor, the power losses would occur. Moreover, with the rotor being operated at low speeds or stalled at desired angular positions, the rotor is apt to have frequently the variations in torque and speed thereof, which are commonly referred to as cogging, due to variations in magnetic flux as rotor poles move past stator poles, thereby failing in keeping steady rotation. How to reduce or eliminate the cogging has been, therefore, recognized as a major problem of the permanent-magnet motor generator to be overcome.

The diverse constructions of the motor generator have been heretofore proposed to intensify the magnetic force. At the present time, however, no predominant construction has been born. In the past, attempt was figured out to make the generator so larger as to deliver the high-electric power, which is in turn stored in batteries or used for energizing the heaters and compressors. Nevertheless, enlarging in size the generators raises other many problems hard to be overcome as to expensive production cost and large spacing for accommodating such generator.

While the motor generators having the permanent-magnet rotor are adapted for high speed and compact construction, It has been very tough to use them in applications such as machine tools, where the generators should be inevitably made complicated in construction to cope with the operation under severe working condition or atmosphere. To help ensure the much efficient operation of the motor generator having incorporated the compact rotor therein, it is preferred to make the clearance between the permanent magnets and the stator as small as possible. To this end, it becomes necessary to finish with accuracy the periphery of the rotor.

As the generated electric power in the motor generators is equal to the product obtained by multiplying the rpm value of the rotor by the intensity of magnetic field, the higher the rpm value of the rotor is, the greater is the generated power. Moreover, the intensity of magnetic field in the motor generators is defined as the product obtained by multiplying the force of magnetic flux by the area of any cross section taken normal to the direction of the flux of the permanent magnet. Accordingly, the greater the flux force and the area of the permanent magnet become, the higher the electric power generated in the motor generator increases.

Moreover, since the rotor revolving with high speed in the motor generator is affected by the large centrifugal force, the permanent magnets must be ordinarily reinforced to keep the rotor from the burst owing to the centrifugal force. This requires the motor generator improved in construction so as to increase the mechanical strength of the permanent magnets. In addition, the output of the motor generator rises with increase in the rpm of the rotor. But if the magnetic force of the permanent magnets becomes too large at operation with high speeds, a counter electromotive force occurs to cause the efficiency losses. Thus, there are many problems to consider as to what design should be figured out to make the rotor light in weight as well as ensure the stiffness or rigidity to withstand against the high-speed revolution.

It is a primary aim of the present invention to provide paths for magnetic flux, which, nevertheless small in space, permit the magnetic forces produced by the permanent-magnet member to pass easily or efficiently through cores or permeable member of the rotor shaft. More particular, an aim of the present invention is to provide a high-torque motor generator, in which the permeable member is made of platy laminations of amorphous alloys, the platy laminations being arranged substantially normal to the permanent-magnet member made in the form of a cylinder, and the platy laminations are circularly arranged in juxtaposition with non-magnetic pieces interposed between any two adjoining platy laminations in the form of a cylinder. Moreover, the present invention provides a high-torque motor generator in which electromagnet cores are provided at lengthwise opposing ends of the rotor, each to each end, such that the magnetic forces exerted by the electromagnets are added on the magnetic forces produced by the multipolar permanent-magnet member to thereby intensity the rotor torque at low speed revolutions. The present invention has a further aim, the provision of a high-torque motor generator in which the magnetic forces exerted by the electromagnets are so controlled as to flow in a direction either equal or opposite to the direction of the magnetic flux of the permanent-magnet member 5. In order to intensify the torque at low speed revolutions, the electromagnets are energized to develop the magnetic forces flowing in the direction identical with that of the permanent-magnet member. In contrast, when the rotor is regulated in rotating speed from high-speed to low-speed revolutions or stopped, the electromagnets are actuated to develop the magnetic forces opposite in direction to the permanent-magnet member to reduce the magnetic forces passing through the stator, thereby helping ensure the smooth revolution or the rotor with no occurrence of cogging.

The present invention is concerned with a high-torque motor generator, which comprises a rotor shaft supported for rotation in a housing, a rotor mounted against rotation on the rotor shaft, a stator arranged around the rotor and fixed to the housing, and electromagnets composed of cylindrical electromagnet cores arranged on the rotor shaft at lengthwise opposing ends of the rotor, each to each end, and cylindrical electromagnet coils arranged in magnetic path cases in the housing in correspondence with the electromagnet cores; the rotor being comprised of a cylindrical magnetic permeable member arranged on the rotor shaft in adjacency with the electromagnet cores, a cylindrical magnetic path core arranged around an outer periphery of the permeable member, a cylindrical permanent-magnet member arranged around an outer periphery of the magnetic path core, and a non-magnetic reinforcing member fixed surrounding around the permanent-magnet member, the cylindrical permeable member being of permeable pieces, which extend axially of the rotor and surround the rotor shaft in juxtaposition with non-magnetic pieces interposed between any two adjoining permeable pieces, the magnetic path core being of permeable pieces, which arranged in juxtaposition with non-magnetic pieces interposed between any two adjoining permeable pieces, the permanent-magnet member being of permanent-magnet pieces, which extend axially of the rotor and surround the rotor shaft in juxtaposition with non-magnetic pieces interposed between any two adjoining permanent-magnet pieces, and the permanent-magnet pieces being arranged such that poles on any permanent-magnet piece alternate in polarity circularly around the rotor; and wherein the permeable pieces of the permeable member are made of platy laminations of permeable plates overlaid one on the other to a width of the permanent-magnet piece in a direction along the periphery of the rotor and the platy laminations are arranged in juxtaposition with the non-magnetic pieces interposed between any two adjoining laminations in a cylinder, thereby forming magnetic paths, which permit magnetic flux to pass in an axial direction of the rotor.

In an aspect of the present invention a high-torque motor generator is disclosed, wherein the platy laminations of the permeable member are made of amorphous alloys, which are selected from amorphous ferroalloys containing large amounts of Si, molybdenum-nickel-iron alloy, alperm and sendust.

In an aspect of the present invention a high-torque motor generator is disclosed, wherein the electromagnet cores are each comprised of radial extensions made in close contact with the rotor so as to permit the magnetic flux to pass along the direction of the field flux of the permanent-magnet member, and a sleeve notched at angular intervals to axially space apart away the rotor from the radial extensions. Moreover, the electromagnet cores are composed of an alloy having much higher magnetic permeability, selected from ferrite, molybdenum-nickel-iron alloy, alperm and sendust.

In another aspect of the present invention a high-torque motor generator is disclosed, wherein field paths are provided for permitting the magnetic flux to pass through the permeable member, electromagnet cores, magnetic path cases, a stator core of the stator, the permanent-magnet member and the magnetic path core.

In another aspect of the present invention a high-torque motor generator is disclosed, wherein magnetic forces produced by the permanent-magnet member are isolated magnetically from each other by the non-magnetic pieces interposed between any two adjoining permanent-magnet pieces and extend axially in parallel with the magnetic flux of the permeable member.

In an aspect of the present invention a high-torque motor generator is disclosed, wherein the non-magnetic pieces interposed between the adjoining platy laminations of the permeable member are made of a non-magnetic material selected from aluminum and austenitic steel, and the non-magnetic pieces are arranged in a cylinder in combination with the platy laminations.

In an aspect of the present invention a high-torque motor generator is disclosed, wherein the platy laminations in the cylindrical permeable member are arranged extending axially in continuity with the cylindrical electromagnet cores.

An a further another aspect of the present invention a high-torque motor generator is disclosed, wherein one of the electromagnet cores, disposed at one lengthwise end of the rotor, is positioned confronting the permanent-magnet piece having the N-pole outside the piece and the S-pole inside the piece, whereas another of the electromagnet cores, disposed at the lengthwise opposing end of the rotor, is positioned confronting the permanent-magnet piece having the S-pole outside the piece and the N-pole inside the piece, whereby the magnetic flux is allowed to pass along the magnetic poles of the permanent-magnet member.

In an aspect of the present invention a high-torque motor generator is disclosed, wherein the electromagnet cores are each notched at its one end adjacent with the permeable member in the form of teeth and made at its opposing end in a sleeve, whereby the magnetic forces developed in the electromagnets are divided into the associated platy laminations where the magnetic forces flow reversely.

In an aspect of the present invention, a high-torque motor generator is disclosed, wherein a controller unit to regulate the magnetic forces of the electromagnets makes the electromagnets conductive in response to low speeds of the rotor shaft to add magnetic flux lines in the electromagnet cores to magnetic flux lines developed in the permanent-magnet member, thereby intensify a torque at the low speeds.

In another aspect of the present invention a high-torque motor generator is disclosed, which includes switching means to change the direction of electric current to energize the electromagnets, where the magnetic forces are produced in a direction either equal or opposite to the direction at the magnetic force of the permanent-magnet pieces of the permanent-magnet member, depending on the direction of the current applied to the electromagnets, and further includes the controller unit to actuate the switching means in response to any one of the events, where the rotor is changed tram the high speed to low speed revolutions, stopped and started.

In another aspect of the present invention a high-torque motor generator is disclosed, wherein the controller unit makes the electromagnet coils conductive, whereby the electromagnets permit the magnetic forces to pass through the electromagnet core in correspondence with the magnetic forces of the permanent-magnet pieces in the permanent-magnet member.

In an aspect of the present invention a high-torque motor generator is disclosed, wherein the controller unit actuates the switching means so as to change the direction of electric current applied to the electromagnet coils to energize the electromagnets, which in turn develop the magnetic forces of the direction opposite to the direction of the magnetic forces of the permanent-magnet member, in response to any one of the events, where the rotor is operated at high speeds, changed from the high speed to low speed revolutions and stopped. Thus, the magnetic forces counteract each other to reduce the magnetic forces flowing through the stator, thereby making it possible to stall the rotor shaft at desired positions and operate the rotor shaft at low speed revolution with no occurrence of cogging. In contrast, as the magnetic forces produced by the permanent magnets are too large on high-speed revolutions, erasing the opposite magnetic forces results in depressing the torque with increasing the efficiency.

In another aspect of the present invention a high-torque motor generator is disclosed, wherein the controller unit actuates the switching means so as to change the direction of electric current applied to the electromagnet coils to energize the electromagnets, thereby developing the magnetic forces identical in direction with the magnetic forces of the permanent-magnet member, in response to any one of the events, where the rotor is started and operated at the low speed revolutions.

In a further aspect of the present invention a high-torque motor generator is disclosed, wherein the controller unit makes the electromagnet coils conductive in response to low speeds of the rotor shaft to add magnetic flux lines in the electromagnet cores to magnetic flux lines developed in the permanent-magnet member, thereby intensify a torque at the low speeds. This makes it possible to develop the torque several times that of only the ordinary rotor, providing the intensified torque at the low speed revolutions, which might be not otherwise realized in the prior permanent-magnet motor generators.

In accordance with the motor generator of the present invention, the permanent-magnet pieces with the S-pole outside the permanent-magnet member and the N-pole inside the permanent-magnet member produce the magnetic forces, which are permitted to pass smoothly through the magnetic permeable member, and in addition, the electromagnets at the lengthwise opposing ends of the rotor develop electromagnetic forces, which have the N-pole at the axially inside or at the side adjacent to the rotor, and the S-pole at the axially outside. Thus, the electromagnetic forces are added to the magnetic forces of the permanent-magnet member, so that all the magnetic flux lines may flow in equal direction to increase the flux density to intensify the torque of the rotor.

The extensions of the electromagnet cores extend radially outwardly to the associated lengthwise end of the reinforcing member to have radii substantially equal with the outer periphery of the rotor, with coming in close contact with the associated lengthwise ends of the rotor. Thus, with the permanent-magnet member of, for example, four-pole permanent-magnet pieces, the two permanent-magnet pieces are arranged such that the N-pole is outside the permanent-magnet member while the S-pole is inside the permanent-magnet member and the electromagnet core, positioned at one end of the rotor, has the electromagnet coil wound in the sense to develop the magnetic flux lines equal in direction with the permanent-magnet pieces. In contrast, the other two permanent-magnet pieces are arranged such that the S-pole is outside the permanent-magnet member while the N-pole is inside the permanent-magnet member and the electromagnet core, positioned at another end of the rotor, has the electromagnet coil wound in the sense to develop the magnetic flux lines equal in direction with the other permanent-magnet pieces. That is to say, the electromagnets arranged at the opposing ends of the rotor, each to each end, are so designed as to produce independently the magnetic forces that are coincident in direction with magnetic forces of the associated permanent-magnet pieces.

In accordance with the motor generator constructed as described Just above, the permeable member of amorphous alloys allows the magnetic forces to pass effectively through the small spaces, thereby increasing the torque at low speed revolutions.

Moreover, the rotor of the present invention has the permanent-magnet member that is made of permanent-magnet pieces arranged in the form of a cylinder, which is then wrapped up with the reinforcing member that is wound around the outer periphery of the cylinder. This makes it possible to provide the rotor of sufficiently high power output, which is nevertheless simple in construction with less production cost.

On starting the rotor that has been standstill, where the magnetic forces of the permanent magnet member have brought any permanent-magnet piece in circumferential alignment with any magnetic pole arranged in the teeth form of the stator, the rotor may start smoothly to rotate because of the minimum resistance to the magnetic torque, whereas after a little angular movement of the rotor, the permanent-magnet pieces come in teeth between the adjacent magnetic poles of the stator to make the torque resistance maximum value and, thus, the rotation of the rotor is retarded. This takes place the motion of recurring the torque ripples to hinder the rotor from the smooth rotation. The rotor of the motor generator of the present invention may be driven with less variation in the rpm by controlling the magnetic forces of the electromagnets as well as the electric current flowing through the electromagnet coils.

In case the motor generator of the present invention is, for example, used for motor operation in the machine tools, gently stopping the rotor shaft at the desired angular position is achieved by wiring reversely the electromagnets to increase gradually the magnetic forces produced by the electromagnets. With the magnetic forces produced by the electromagnets rising up to the value substantially equal to the magnetic forces developed in the permanent-magnet member, the magnetic flux lines passing through the teeth of the stator are made minimum so that the rotor may revolve much smoothly with no occurrence of cogging.

Considering about the intensification of the torque at low speed revolutions in accordance with the motor generator of the present invention, the permeable members provide the paths for the magnetic flux, which permit the smooth passing of the magnetic forces developed in the permanent-magnet pieces that are arranged with the N-pole outside the pieces while the S-pole inside the pieces. Moreover, the electromagnets at the lengthwise opposing ends of the rotor develop electromagnetic forces, which have the N-pole at the axially inside or at the side adjacent to the rotor, and the S-pole at the axially outside. Thus, the electromagnetic forces are added to the magnetic forces of the permanent-magnet member, so that all the magnetic flux lines may flow in equal direction to increase the flux density to intensity the torque of the rotor. Namely, the controller unit makes the electromagnet coils of the electromagnet conductive at the low speed revolutions, thereby increasing the torque of the rotor shaft revolving with the low rpm.

In accordance with the motor generator having the construction as described above, the controller unit actuates the switching means to change the direction of the electric current flowing through the electromagnets, which are arranged at the lengthwise opposing ends of the permanent-magnet member, each to each end. Thus, the magnetic forces produced by the electromagnets may be changed in direction or turned on any direction equal or opposite to the magnetic forces developed by the permanent-magnet member. The magnetic forces equal in direction to that of the permanent-magnet member makes increase the torque at low speed revolutions. In contrast, the magnetic forces opposite to the permanent-magnet member results in decreasing the magnetic forces flowing to the stator, thereby keeping the rotor from the cogging, which might otherwise occur at speed regulation from high speed to low speed, with helping ensure the gentle rotation at low speed as well as the adequate control off the torque at high speed operation.

With the motor generator of the present invention being mounted on the vehicle, sufficient electric power may be supplied, even if the vehicle is stalled, to the heater energized with the electric power generated by the motor generator for regenerating the filter media, which are installed in the diesel particulate filter trap to clean the exhaust gases from the engine mounted on the vehicle. Moreover, the motor generator mounted on the refrigerator lorries may ensure the electric power enough to actuate the evaporators, compressors of the refrigerators and thus the refrigerator lorries are freed from the necessity of another electric source to operate the compressors when the engine is at standstill.

Moreover, the motor generator of the present invention may be well designed for high-speed generators to convert mechanical energy into electric energy or high-speed motors to convert electrical energy into mechanical energy, and also easily adapted to the generators in the cogeneration system, hybrid vehicles and motors used in the machine tools. The motor generator of the present invention may well withstand the high revolution of, for example, 60000 rpm and may be produced with less production cost as well as simple in construction.

Other aims and features of the present invention will be more apparent to those skilled in the art on consideration of the accompanying drawings and following specification wherein are disclosed preferred embodiments of the present invention with understanding that such variations, modifications and elimination of parts may be made therein as fall within the scope of the appended claims without departing from the spirit of the invention.

Embodiments of the present invention will now be described by way of example only, with reference to the accompanying drawings, in which:-
FIG. 1 is an axial sectional view showing a preferred embodiment of a high-torque motor generator in accordance with the present invention:
FIG. 2 is a cross-sectioned view of the high-torque motor generator shown in FIG. 1 and is taken along the line I-I of FIG. 1:
FIG. 3 is a schematic illustration explanatory of magnetic flux lines in the motor generator in FIG. 1:
FIG. 4 is a schematic illustration explanatory of magnetic flux lines in the motor generator and is taken along the cross section in FIG. 2: and
FIG. 5 is a schematic circuit diagram explanatory of an electric circuit including switching means to turn over the direction of the electric current in the motor generator shown in FIG. 1.

A high-torque motor generator in accordance with the present invention will be hereinafter described with reference to the accompanying drawings.

The high-torque motor generator of the present invention is well adapted to a compact motor generator to produce electric power through a rotor shaft 2 coupled and driven with an engine in cogeneration systems or in a hybrid vehicles, or to operate machinery such as machine tools under instructions of a controller unit.

The motor generator mainly has a housing 1 comprised of a pair of housing halves 1A jointed together through clamp screws 27, magnetic path cases 1B arranged fixed in lengthwise opposing ends of the housing halves 1A, each to each half, and non-magnetic covering members 1C shielding around the outer peripheries of the magnetic path cases 1B, a rotor shaft 2 supported for rotation in a pair of roller bearings 13 fixed in the magnetic path cases 1B through non-magnetic members, not shown, a rotor 3 of permanent magnets mounted against rotation on the rotor shaft 2, and a stator 4 fixed in the housing 1 so as to provide a clearance or an air gap 17 extending around the periphery of the rotor 3 to between them.

The rotor 3 is mounted against rotation on the rotor shaft 2 at the lengthwise opposing ends thereof by screwing fixing nuts 11 through keep plates 12 into bolts 24 provided on the rotor shaft 2. The keep plates 12 serve a kind of washer and are so closely adjacent at their outer peripheries to the magnetic path cases 1B as to leave minute clearances between them. Thus, the keep plates 12 provide paths of magnetic flux lines coming from and entering electromagnets 9. The rotor shaft 2 has at its one end, for example, an input pulley, not shown in the drawings, which is in turn connected drivingly to an output shaft of the engine through an endless belt.

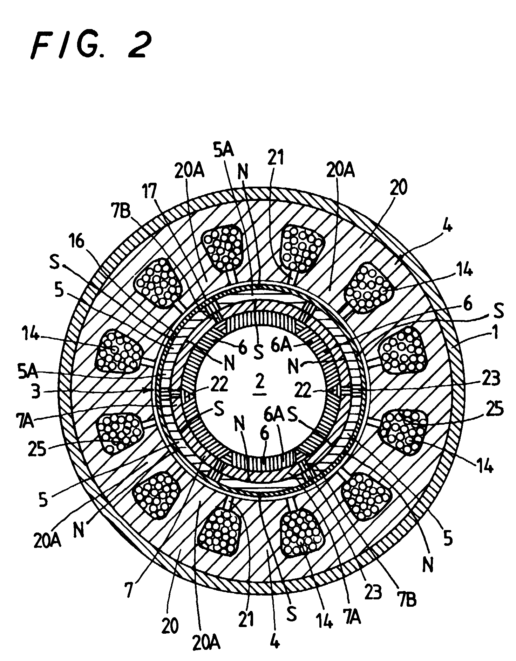

The stator 4, as seen from FIG. 2, is composed of a stator core 20 built up of thin sheet laminations, which has cavities 25 for containing stator coils 14 therein. The stator core 20 is made inside the cavities 25 with slots 21 to isolate adjacent yokes 20A from each other.

The rotor 3 is comprised of a permeable member 6 made of magnetic permeable pieces 6A arranged cylindrically around the outer periphery off the rotor shaft 2 with non-magnetic pieces 22 interposed between any adjoining permeable pieces 6A, a magnetic path core 7 arranged covering over the permeable member 6, a permanent-magnet member 5 disposed over the outer periphery of the magnetic path core 7, the permanent-magnet member 5 being composed of platy permanent-magnet pieces 5A being arranged in such a manner that the poles on either permanent-magnet piece alternate in polarity circularly around the rotor, and a non-magnetic reinforcing member 16 fixed surrounding around the outer periphery of the permanent-magnet member 5.

The electromagnets 9 are each composed of an electromagnet core 8 having an axially extending sleeve 26 notched at angular intervals 15 around the curved surface of the sleeve 26 and a cylindrical electromagnet coil 19. The electromagnet cores 8 are arranged on lengthwise opposing ends of the permeable member 6, each to each end, and fixed to the peripheral surface of the rotor shaft 2, while the electromagnet coils 19 are arranged spaced around the associated electromagnet cores 8 and fixed to the magnetic path cases 1B in the housing 1.

The magnetic path core 7 is made of arced permeable pieces 7A of soft iron or ferrite and non-magnetic pieces 7B of austenitic stainless steel, which are positioned alternately along the periphery of the rotor and joined together in the form of a cylinder. The magnetic path core 7 constructed as described just above is arranged to provide an area enough in axial direction for the magnetic flux of the electromagnet cores 8.

The motor generator described above is characterized in the construction to intensity the torque of the rotor fixed on the rotor shaft 2, which is supported for rotation relative to the stator 4 held to the housing 1 and also characterized in substance composing the permeable member 6. Especially, the permeable member 6 is composed of laminated platy pieces 6A of amorphous alloy or silicon steel of high magnetic permeability extended axially of the rotor and arranged substantially normal to the permanent-magnet member 5, and the non-magnetic pieces 22 each arranged between any two adjoining platy pieces 6A. The permeable member 6 is formed in a cylinder inside hollow to provide the paths of magnetic flux extending axially of the rotor.

The permeable member 6 is composed of any amorphous alloy having much higher magnetic permeability, selected from amorphous ferroalloys, molybdenum-nickel-iron alloy, alperm, sendust and the like. The amorphous ferroalloys are preferably selected from amorphous ferroalloys containing large amounts of Si, amorphous ferroalloys with Mo and amorphous ferroalloys with Mo-Cr, which are high in tensile strength and hardness. It is moreover preferred that the amorphous alloys are selected from Co-base amorphous alloys and Ni-base amorphous alloys, which are superior in tensile strength and hardness. As the permeable member 6 is mounted against rotation on the rotor shaft 2, the diameter of the rotor, including the permeable member 6 and the rotor shaft 2, may be designed arbitrarily by altering the size of the permeable member 6.

The permanent-magnet member 5 is composed of the permanent-magnet pieces 5A arranged in the entire form of a hollow cylinder and jointed together by non-magnetic pieces 23 of vitreous substance, which are filled in any boundary of any two adjoining non-magnetic pieces 5A. The permanent-magnet pieces 5A are disposed in such an array that unlike magnetic poles: N-pole and S-pole of the permanent-magnet pieces appear alternately at every permanent-magnet piece 5A on the curved inner surface of the cylindrical permanent-magnet member 5. Thus, the magnetic poles appearing at every permanent-magnet pieces 5A on the outer surface of the cylindrical permanent-magnet member 5 are opposite to the poles inside the permanent-magnet member 5. The outer periphery of the cylindrical permanent-magnet member 5 is finished to an accurate cylinder. The non-magnetic pieces 23 are each interposed between any two adjacent permanent-magnet pieces 5A to prevent the short-circuit of magnetic flux lines between the adjacent permanent-magnet pieces 5A.

A controller unit 10 makes the electromagnet coils 19 conductive in compliance with the torque of the rotor shaft 2, thereby energizing the electromagnets 9 to develop magnetic flux lines, which are equal in direction of flux path with the magnetic flux of the permanent-magnet member 5. The electromagnets 8 may be made of a material similar with the permeable member 6.

The electromagnet cores 8 are each comprised of radial extensions 18 made in close contact with the rotor 3 so as to allow the magnetic flux to pass along the direction of the field flux of the permanent-magnet member 5, and the sleeve 26 notched at angular intervals 15 to axially space apart away the rotor 3 from the radial extensions 18. These extensions 18 of the electromagnet cores 8 extend radially outwardly to the associated lengthwise end of the reinforcing member 16, with coming in close contact with the associated lengthwise ends of the magnetic permeable member 6, magnetic path core 7 and the permanent-magnet member 5. Moreover, the electromagnets 8 may be made of a material likewise with the magnetic permeable member 6. The controller unit 10 turn on the electromagnet coils 19 in accordance with the rpm of the rotor shaft 2, more particular, the low speeds of the engine, thereby developing the magnetic flux passing through the electromagnet cores 8 to intensity the torque of the rotor shaft 2. In this event, the magnetic permeable member 6 and the electromagnet cores 8, in combination, provide an easy path for the magnetic flux passing through axially of the rotor.

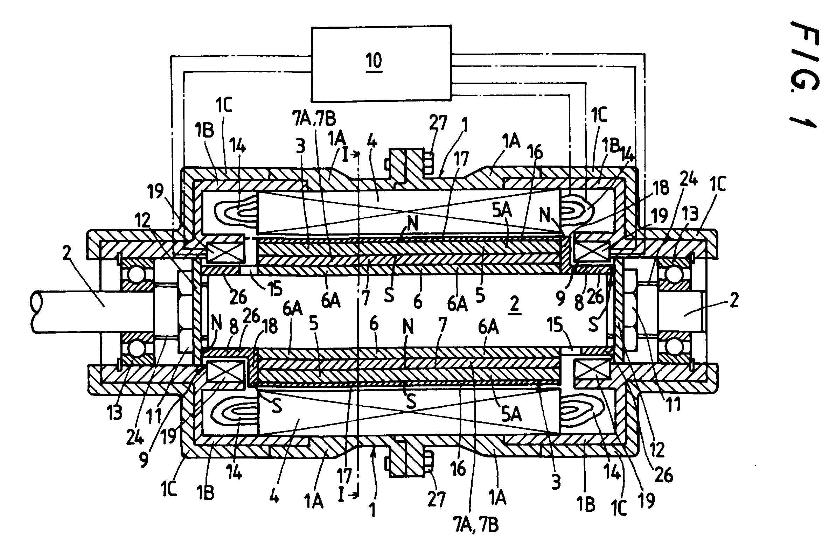

The upward permanent-magnet piece of the permanent-magnet member 5 in FIG. 1 is disposed with the S-pole being inside the curved periphery and the N-pole outside the curved periphery. Moreover, the upward extension 18 of the electromagnet core 8 turns to N-pole while the sleeve 26 of the electromagnet core 8 turns to S-pole at an area coming in contact with the keep plate 12. In contrast, the downward permanent-magnet piece of the permanent-magnet member 5 is disposed with the N-pole being inside the curved periphery and the S-pole outside the curved periphery. The downward extension 18 of the electromagnet core 8 turns to S-pole while the sleeve 26 of the electromagnet core 8 turns to N-pole at an area coming in contact with the keep plate 12. Thus, the magnetic flux lines produced by permanent-magnet member 5 and the electromagnets 9 are allowed to pass easily with forming loops of field flux.

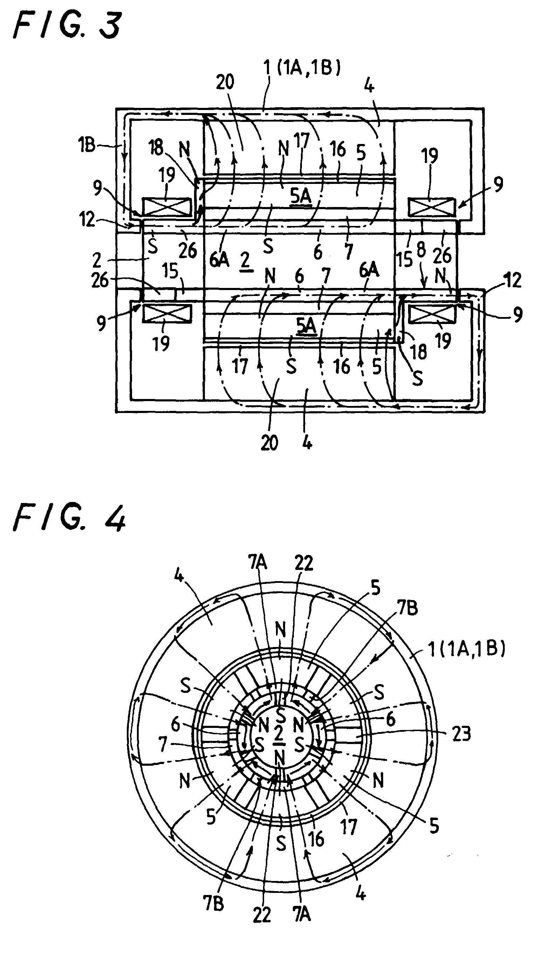

As shown in FIG. 3, the axial path for the magnetic flux lines produced by the electromagnets 9 are developed by, for example, at the upward region in the motor generator, loops of magnetic flux coming from and entering the sleeves 26 of the electromagnets 8 through the associated extensions 18, the associated permanent-magnet piece 5A of the permanent-magnet member 5, the stator core 20 in the stator 4, the magnetic path case 1B in the housing 1 and the keep plate 12, and also other loops of magnetic flux coming from and entering the sleeves 26 of the electromagnets 8 through the associated laminated permeable pieces 6A of the permeable member 6, the magnetic path core 7, the associated permanent-magnet piece 5A of the permanent-magnet member 5, the stator core 20 in the stator 4, the magnetic path case 1B in the housing 1 and the keep plate 12. The axial path for the magnetic flux lines produced by the electromagnets 9 are, moreover, developed by, at the downward region in the motor generator, loops of magnetic flux coming from and entering the sleeves 26 of the electromagnets 8 through the keep plate 12, the magnetic path case 1B in the housing 1, the stator core 20 in the stator 4, the associated permanent-magnet piece 5A of the permanent-magnet member 5 and the associated extensions 18, and also other loops of magnetic flux coming from and entering the sleeves 26 of the electromagnets 8 through the keep plate 12, the magnetic path case 1B in the housing 1, the stator core 20 in the stator 4, the associated permanent-magnet piece 5A of the permanent-magnet member 5, the magnetic path core 7 and the associated laminated permeable pieces 6A of the permeable member 6.

Both the magnetic permeable member 6 and electromagnet core 8 are made of a material much high in magnetic permeability such as ferrite, molybdenum-nickel-iron alloy, sendust and the like. The ferrite has the general formula: Mnₓ Zn_{y} Fe_{z} , the concrete percentage (wt%) chemical composition of which is MnO : ZnO : Fe₃O₄ = 22 : 15 : 63, or MnO : ZnO : Fe₃O₄ = 15∼19 : 13∼17 : 67∼78. The molybdenum-nickel-iron alloy is Ni-Fe magnetic alloy, the concrete percentage(wt%) chemical composition of which is Ni : Fe : Mo=79 : 17 : 4. As an alternative, the sendust is magnetic alloy containing Fe-Si-Al, the concrete percentage(wt%) chemical composition of which is Fe : Si : Al=85 : 9 : 6. Besides the material described above, alperm may be employed for the electromagnet core 8.

As the reinforcing member 16 surrounds around the permanent-magnet member 5 to enhance in mechanical strength the permanent-magnet pieces and the joints of them, the rotor 3 may be well protected against the burst due to the centrifugal force applied at high-speed revolution.

The rotor 3 with the reinforcing member 16 is enhanced entirely in stiffness or rigidity and made reduced in weight, thereby resulting in well withstanding the high-speed revolution with the high output.

The reinforcing member 16 may be made of reinforcing wires of filaments or fibers of, for example, stainless steel, ceramics, carbon and others having no magnetism, which are wound around the periphery of the permanent-magnet member 5 at elevated temperatures and bonded together with vitreous material. Moreover, the reinforcing wires are wound about the periphery of the permanent-magnet member 5 with a slight elongation under tensile force. Cooling the wound wires shrinks the elongation to bond together compressively the wires around the permanent-magnet member 5. The reinforcing material for the reinforcing member 16 may be selected from wires or thin sheet of carbon or metals of non-magnetic property. Moreover, the vitreous material for the reinforcing member 16 may be composed of silicate glasses and/or borosilicate glasses. As an alternative, the reinforcing wires for the reinforcing member 16 may be produced by, for example, coating carbon filaments or ceramics filaments having no magnetism with resinous materials.

Moreover, the non-magnetic pieces 22, 23 are composed of, for example, enamels composed of admixture of iron and copper with glasses such as silicate glasses, borosilicate glasses or the like. To joint together any two adjoining permanent-magnet pieces 5A with the non-magnetic pieces 23 into the permanent-magnet member 5, the admixture for the non-magnetic pieces 23 is tilled together with ceramics such as Al₂O₃ into clearances between any two adjoining permanent-magnet pieces 5A, followed by heating up to 600 °C-300°C. Another non-magnetic pieces 22, as with the non-magnetic pieces 23 described just above, may also joint together the magnetic permeable pieces 6A to the permeable member 6.

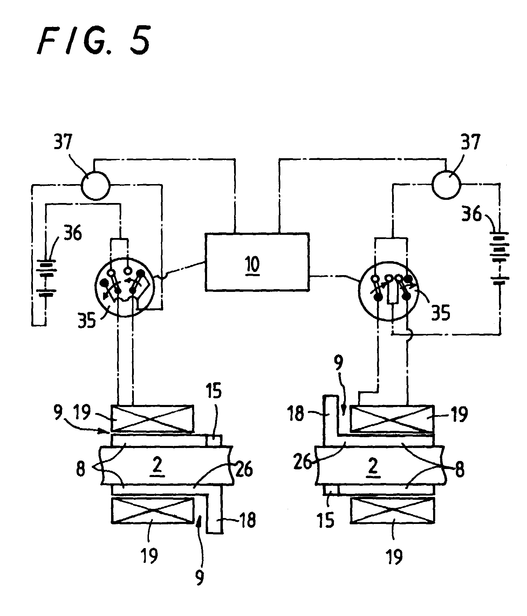

Next referring to FIG. 5, the high-torque motor generator of the present invention includes switching means 35, 35, which change the direction of electric current to energize the electromagnets 9, where the magnetic flux is produced in a direction either equal or opposite to the direction of the magnetic flux of the permanent-magnet member 5, depending on the direction of the current applied to the electromagnets 9, and further includes the controller unit 10 to actuate the switching means 35, 35 in response to any one of the events, where the rotor 3 is changed from the high speed to low speed revolutions, stopped and started. The switching means 35, 35 are electrically connected in series with batteries 36, 36, power-adjusting means 37, 37 regulated by the controller unit 10, and the electromagnetic coils 19 of electomagnets 9. Thus, the switching means 35 are to change the direction of the electric current applied to the electromagnet coils 19 of the electromagnets 9.

On any one of situations where the rotor 3 is changed from the high-speed to low-speed revolutions and stopped, the controller unit 10 issues the instructions in response to the situations to the switching means 35, where the electric current is changed in direction to produce the magnetic force either equal or opposite to the permanet-magnet member 5. In order to intensify the the torque at low-speed revolutions of the rotor 3, the controller unit 10 makes the electromagnet coils 19 conductive in such a manner that the electromagnets 9 may develop the magnetic flux lines identical in direction with those of the permanent-magnet member 5, thereby resulting in enhancing the torque of the rotor 3 at low speeds. Moreover, when the controller unit 10 energizes the electromagnets 9 at high-speed operation of the rotor 3 so as to develop the magnetic force opposite to the permanent-magnet member 5, the torque of the rotor 3 may be reduced with no control mechanism.

## Claims

1. A high-torque motor generator comprising
a rotor shaft(2) supported for rotation in a housing(1), a rotor(3) mounted against rotation on the rotor shaft (2), a stator(4) arranged around the rotor(3) and fixed to the housing(1), and electromagnets(9) composed of cylindrical electromagnet cores(8) arranged on the rotor shaft(2) at lengthwise opposing ends of the rotor (3), each to each end, and cylindrical electromagnet coils(19) arranged in magnetic path cases(1B) in the housing(1) in correspondence with the electromagnet cores(8);
the rotor(3) being comprised of a cylindrical magnetic permeable member(6) arranged on the rotor shaft(2) in adjacency with the electromagnet cores(8), a cylindrical magnetic path core(7) arranged around an outer periphery of the permeable member(6), a cylindrical permanent-magnet member(5) arranged around an outer periphery of the magnetic path core(7), and a non-magnetic reinforcing member(16) fixed surrounding around the permanent-magnet member(5), the cylindrical permeable member(6) being of permeable pieces(6A), which extend axially of the rotor(3) and surround the rotor shaft(2) in juxtaposition with non-magnetic pieces(22) interposed between any two adjoining permeable pieces(6A), the magnetic path core(7) being of permeable pieces(6A), which arranged in juxtaposition with non-magnetic pieces(7B) interposed between any two adjoining permeable pieces(6A), tje permanent-magnet member(5) being of permanent-magnet pieces(5A), which extend axially of the rotor(3) and surround the rotor shaft(2) in juxtaposition with non-magnetic pieces(6A) interposed between any two adjoining permanent-magnet pieces(5A), and the permanent-magnet pieces(5A) being arranged such that poles on any permanent-magnet piece alternate in polarity circularly around the rotor(3); and
wherein the permeable pieces(6A) of the permeable member(6) are made of platy laminations of permeable plates(6A) overlaid one on the other to a width of the permanent-magnet piece(5A) in a direction along the periphery of the rotor(3) and the platy laminations are arranged in juxtaposition with the non-magnetic pieces (22,23) interposed between any two adjoining laminations in a cylinder, thereby forming magnetic paths, which permit magnetic flux to pass in an axial direction of the rotor(3).

2. A high-torque motor generator constructed as defined in claim 1, wherein the platy laminations(6A) of the permeable member(6) are made of amorphous alloys.

3. A high-torque motor generator constructed as defined in claim 2, wherein the amorphous alloys composing the permeable member(6) are selected from amorphous ferroalloys containing large amounts of Si, molybdenum-nickel-iron alloy, alperm and sendust.

4. A high-torque motor generator constructed as defined in claim 1, wherein the electromagnet cores(8) are each comprised of radial extensions(18) made in close contact with the rotor(3) so as to permit the magnetic flux to pass along the direction of the field flux of the permanent-magnet member(5), and a sleeve(26) notched at angular intervals(15) to axially space apart away the rotor(3) from the radial extensions(18).

5. A high-torque motor generator constructed as defined in claim 1, wherein the electromagnet cores(8) is composed of an alloy having much higher magnetic permeability, selected from ferrite, molybdenum-nickel-iron alloy, alperm and sendust.

6. A high-torque motor generator constructed as defined in claim 1, wherein paths are provided for permitting the magnetic flux to pass through the permeable member(6), electromagnet cores(8), magnetic path cases(1B), a stator core(20) of the stator(4), the permanent-magnet member(5) and the magnetic path core (7).

7. A high-torque motor generator constructed as defined in claim 1, wherein magnetic forces produced by the permanent-magnet members(5) are isolated magnetically from each other by the non-magnetic pieces (22,23) interposed between any two adjoining permanent-magnet pieces(5A) and extend axially in parallel with the magnetic flux of the permeable member(6).

8. A high-torque notor generator constructed as defined in claim 1, wherein the non-magnetic pieces(22, 23) interposed between the adjoining platy laminations (6A) of the permeable member(6) are made of a non-magnetic material selected from aluminum and austenitic steel, and the non-magnetic pieces(22,23) are arranged in a cylinder in combination with the platy laminations (6A).

9. A high-torque motor generator constructed as defined in claim 1, wherein the platy laminations(6A) in the cylindrical permeable member(6) are arranged extending axially in continuity with the cylindrical electromagnet cores(8).

10. A high-torque motor generator constructed as defined in claim 1, wherein one of the electromagnet cores(8), disposed at one lengthwise end of the rotor (3), is positioned confronting the permanent-magnet piece having the N-pole outside the piece and the S-pole inside the piece, whereas another of the electromagnet cores(8), disposed at the lengthwise opposing end of the rotor(3), is positioned confronting the permanent-magnet piece having the S-pole outside the piece and the N-pole inside the piece, whereby the magnetic flux is allowed to pass along the magnetic pales of the permanent-magnet member(5).

11. A high-torque motor generator constructed as defined in claim 1, wherein the electromagnet cores(8) are each notched at its one end adjacent with the permeable member(6) in the form of teeth and made at its opposing end in a sleeve(26), whereby the magnetic forces developed in the electromagnets(9) are divided into the associated platy laminations where the magnetic forces flow reversely.

12. A high-torque motor generator constructed as defined in claim 1, wherein a controller unit(10) to regulate the magnetic forces of the electromagnets(9) makes the electromagnets(9) conductive in response to low speeds of the rotor shaft(2) to add magnetic flux lines in the electromagnet cores(8) to magnetic flux lines developed in the permanent-magnet member(5), thereby intensify a torque at the low speeds.

13. A high-torque motor generator constructed as defined in claim 1, which includes switching means(35) to change the direction of electric current to energize the electromagnets(9), where the magnetic forces are produced in a direction either equal or opposite to the direction of the magnetic force of the permanent-magnet pieces(5A) of the permanent-magnet member(5), depending on the direction at the current applied to the electromagnets(9), and further includes the controller unit(10) to actuate the switching means(35) in response to any one at the events, where the rotor(3) is changed from the high speed to low speed revolutions, stopped and started.

14. A high-torque motor generator constructed as defined in claim 13, wherein the controller unit(10) makes the electromagnet coils(19) conductive, whereby the electromagnets(9) permit the magnetic forces to pass through the electromagnet core(8) in correspondence with the magnetic forces of the permanent-magnet pieces(5A) in the permanent-magnet member(5).

15. A high-torque motor generator constructed as defined in claim 13, wherein the controller unit(10) actuates the switching means(35) so as to change the direction of electric current applied to the electromagnet coils(19) to energize the electromagnets (9), which in turn develop the magnetic forces of the direction opposite to the direction of the magnetic forces of the permanent-magnet member(5), in response to any one of the events, where the rotor(3) is operated at high speeds, changed from the high speed to low speed revolutions and stopped.

16. A high-torque motor generator constructed as defined in claim 13, wherein the controller unit(10) actuates the switching means(35) so as to change the direction of electric current applied to the electromagnet coils(19) to energize the electromagnets (9), thereby developing the magnetic forces identical in direction with the magnetic forces of the permanent-magnet member(5), in response to any one of the events, where the rotor(3) is started and operated at the low speed revolutions.

17. A high-torque motor generator constructed as defined in claim 13, wherein the controller unit(10) makes the electromagnet coils(19) conductive in response to low speeds of the rotor shaft(2) to add magnetic flux lines in the electromagnet cores(8) to magnetic flux lines developed in the permanent-magnet member(5), thereby intensify a torque at the low speeds.
